# FASCICULE DE BREVET EUROPEEN

(11) **EP 0 329 544 B1**
(45) Date de publication et mention de la délivrance du brevet: **07.01.1993**
(21) Numéro de dépôt: 89400405.0
(22) Date de dépôt: 14.02.1989
(51) Int. Cl.: B01D 46/12, B01D 46/52, B01D 46/42, B60H 3/06

(54) **Bloc filtrant et équipement de filtration**
Filterblock und Filtrationsausrüstung
Filter block and filtration equipment

(30) Priorité: 19.02.1988 FR 8801984
(43) Date de publication de la demande: 23.08.1989
(73) Titulaire: SP DEFENSE, F-3000 Nimes (FR)
(72) Inventeur: Develle, Guy, F-95330 Domont (FR); Chaperon, Robert, F-95630 Meriel (FR)
(74) Mandataire: Le Moenner, Gabriel

(56) Documents cités:
- CH-A- 491 665
- FR-A- 2 396 580
- FR-A- 2 523 275
- LU-A- 53 909

## Description

La présente invention concerne un bloc filtrant et un équipement de filtration l'incorporant, destinés à l'alimentation en air respiratoire épuré d'un habitacle confiné, le cas échéant embarqué sur véhicule, d'isolement de l'atmosphère ambiante contaminée par effets nucléaire et/ou biologiques, et/ou chimiques ("N.B.C.").

Pour ce type de matériels, qui n'est destiné à être mis en oeuvre que de façon rarissime en cas d'incidents graves, pouvant se produire sans alerte préalable sur des sites aléatoires d'intervention, on doit maintenir le bloc de filtration à la fois à proximité immédiate des habitacles concernés et à l'abri de l'air environnant, qui risquerait à la longue de détériorer les granulés adsorbants et, à cet effet, on isole le bloc filtrant de l'air environnant en le plaçant dans un emballage étanche du type à dégagement manuel rapide, et on place le bloc filtrant dans le caisson de réception normal d'opération d'un équipement de filtration. En cas de danger, on peut alimenter l'habitacle en air épuré en procédant au retrait du bloc filtrant hors du caisson accessible de l'intérieur de l'habitacle, en dégageant rapidement l'emballage du bloc filtrant et en réintroduisant le bloc filtrant à l'état actif dans le caisson et en le verrouillant en position opérationnelle.

Cette façon de procéder est satisfaisante, car elle ne nécessite aucun aménagement spécial de stockage dans l'habitacle (en dehors des sites de stockage de blocs filtrants destinés à remplacer ceux en fin d'utilisation) et la rapidité de sa mise en oeuvre répond à la soudaineté imprévisible de la contamination atmosphérique.

La demanderesse a cependant imaginé de perfectionner ce genre de matériels en assurant un encombrement spécifique plus faible et une simplification des moyens de mise en oeuvre. Elle est partie de cette constatation que l'emballage d'isolement atmosphérique du bloc filtrant conduisait d'une part à un léger surdimensionnement du caisson récepteur, puisque le bloc filtrant dans son emballage y est entreposé en position d'attente, d'autre part à la nécessité de disposer de moyens de maintien en position verrouillée à double position du bloc filtrant dans son caisson, l'une correspondant à la position d'attente du bloc filtrant enveloppé de son emballage, l'autre du bloc filtrant dégagé de son emballage et donc d'encombrement plus réduit.

La présente invention vise à adapter rigoureusement l'encombrement externe du bloc filtrant au caisson qui lui sert de logement et à simplifier les moyens de verrouillage en position du bloc filtrant dans son logement.

Ce double objectif est atteint, selon l'invention, par le fait que les passages d'admission et d'évacuation du bloc filtrant sont obturés par des opercules d'étanchéité solidarisés périphériquement au boîtier du bloc filtrant et susceptibles d'être dégagés manuellement. Ces opercules forment ainsi, en collaboration avec le boîtier du bloc filtrant, une enceinte d'isolement étanche à l'égard de l'air ambiant et comme ces opercules sont réalisés à très faible épaisseur, puisqu'ils n'ont aucun rôle porteur contrairement à l'emballage usuel, l'encombrement du bloc filtrant est pratiquement le même qu'il soit ou non pourvu de tels opercules. Les dimensions du caisson récepteur peuvent alors être légèrement réduites d'une part, et d'autre part les moyens de maintien en position verrouillée du bloc filtrant dans son caisson sont simplifiés, puisqu'ils ne doivent assurer qu'une seule et unique position de verrouillage.

Selon une forme particulière de réalisation, les moyens de jonction d'étanchéité périphérique étant du genre à joint annulaire en matériau élastique, l'opercule d'étanchéité du passage associé au dit joint s'étend au-delà du dit joint en le recouvrant. Selon une variante de réalisation, l'opercule d'étanchéïté d'un passage s'étend en deça dudit joint annulaire périphérique, sans le recouvrir.

Selon une variante de mise en oeuvre, les moyens de jonction d'étanchéité à la périphérie d'un passage comprenant des moyens d'ancrage pour un joint amovible qui est conservé en fonction d'attente à part du bloc filtrant, ce joint élastique est individuellement placé dans une enveloppe d'étanchéité dégageable manuellement.

L'invention concerne également un équipement de filtration, notamment "NBC", comprenant un caisson de filtration associé à des moyens de ventilation et incorporant un bloc filtrant tel que défini ci-dessus Des moyens de maintien en fonction verrouillée du dit bloc filtrant contre une face interne d'une paroi du caisson, avec interposition d'un joint d'étanchéité sont prévus, et les dits moyens de maintien en position verrouillée sont adaptés à assurer une position de verrouillage unique.

Les caractéristiques et avantages de l'invention ressortiront d'ailleurs de la description qui suit, à titre d'exemple, en référence aux dessins annexés dans lesquels :

La figure 1 est une vue en perspective d'un bloc filtrant en attente d'opération.

La figure 2 est une vue identique à la figure 1, ce même bloc filtrant prêt à l'emploi.

Les figures 3 et 4 sont des vues partielles agrandies des figures 2 et 1 respectivement.

Les figures 5 et 6 sont deux variantes de réalisation.

Les figures 7 et 8 sont des vues d'un équipement complet de filtration.

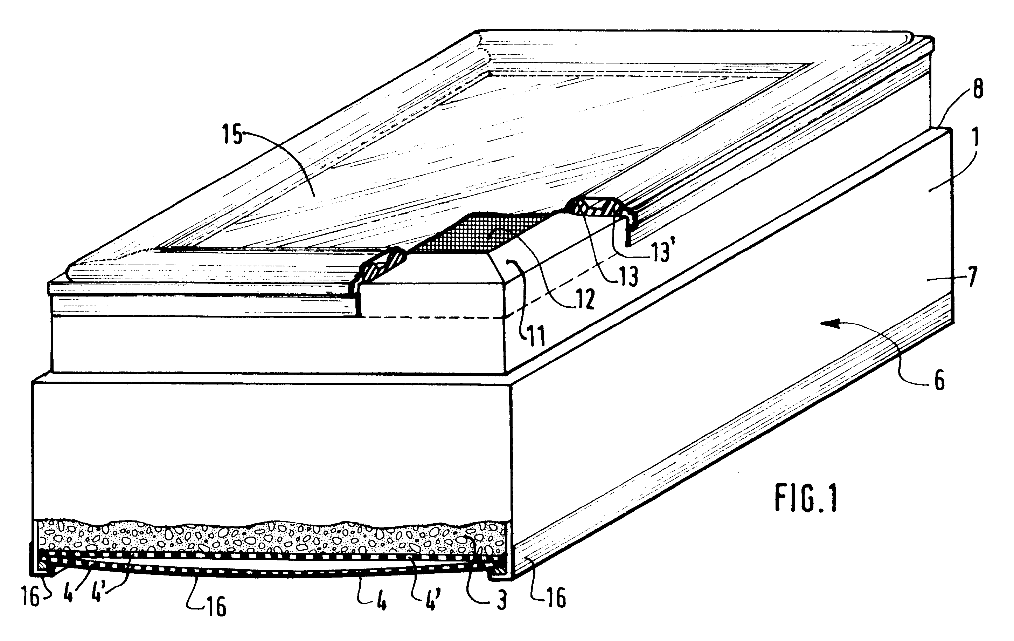

En se référant aux figures 1 à 4, un bloc filtrant 1 est constitué de deux étages de filtration superposés, l'un (2) étant constitué de papier filtre plissé, l'autre (3) constitué de granulés adsorbants maintenus serrés entre un double fond perforé 4,4′, et un double couvercle perforé 5,5′.

Les étages de filtration 2 et 3 sont maintenus dans un boîtier 6 constitué essentiellement d'une paroi latérale 7 à décrochement rentrant 8 pour former appui du couvercle 5′ et à bord inférieur rentré 9 pour former appui inférieur par la cale 10 pour le fond 4. Il y a lieu de noter que le décrochement sert également de détrompeur pour éviter d'introduire le filtre à l'envers.

Cette paroi latérale 7 présente en outre , au-dessus de l'étage "papier" un large rebord rentrant 11 contre la face interne duquel est fixé un panneau perforé 12 formant passage gazeux. Sur ce rebord 11 est monté un double joint annulaire 13,13′.

Dans l'état d'attente opérationnelle avant une première utilisation, le bloc filtrant est rendu étanche à l'égard de l'atmosphère environnante par fixation étanche - collage ou soudage - d'un opercule obturateur 15 en regard du panneau perforé 12 et d'un opercule obturateur 16 en regard du fond perforé 4 formant le second et dernier passage gazeux. A la figure 1, l'opercule obturateur 15 s'étend à recouvrement du joint annulaire 13,13′ jusqu'au bord supérieur de la paroi latérale 7.

Ces opercules obturateurs 15 et 16 sont réalisés de façon à être retirés par simple opération manuelle. Ils peuvent être réalisés de toutes façons appropriées, avec amorce de rupture et/ou bandeau de déchirement et/ou languette de traction, par exemple en matériau barrière (complexe aluminium-polyéthylène)

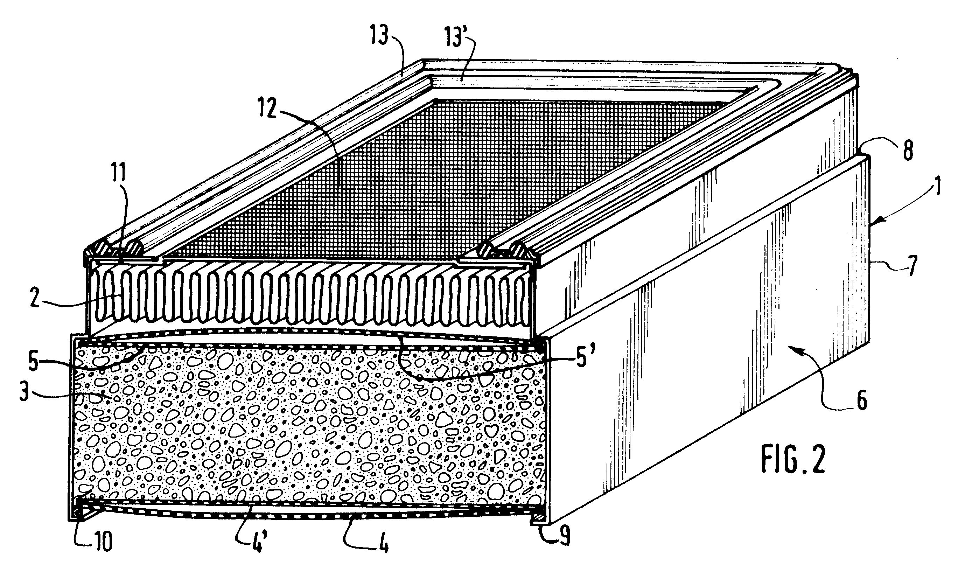

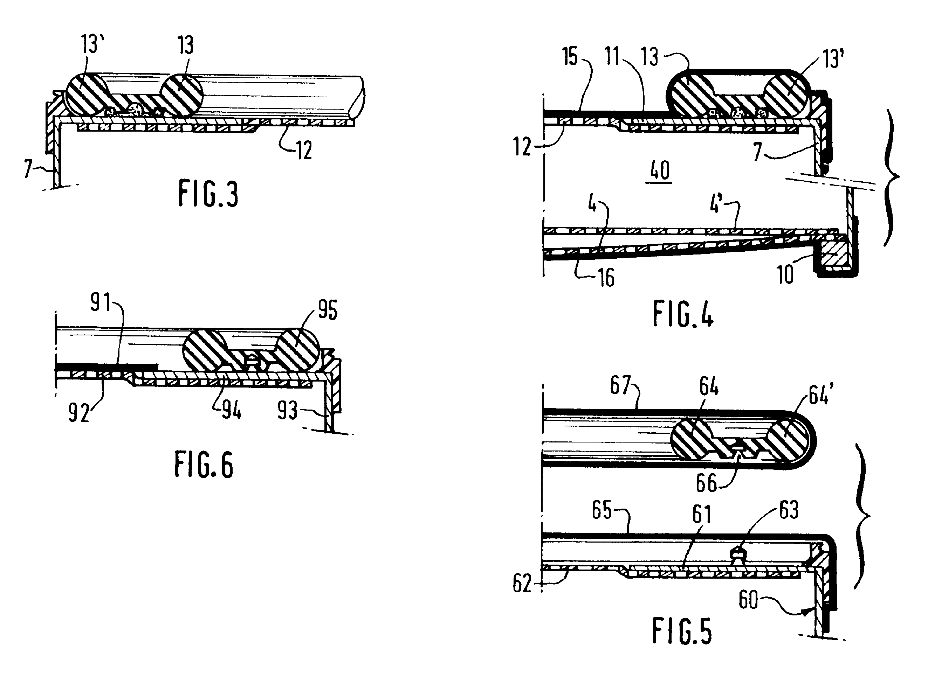

Une fois ces opercules obturateurs dégagés (figures 2 et 3), le bloc filtrant est prêt à opérer en le plaçant dans un caisson de filtration ayant un passage d'introduction de gaz et un passage dévacuation, le bloc filtrant étant maintenu en appui contre une face interne de ce caisson, le joint 13,13′ circonscrivant le dit passage d'admission.

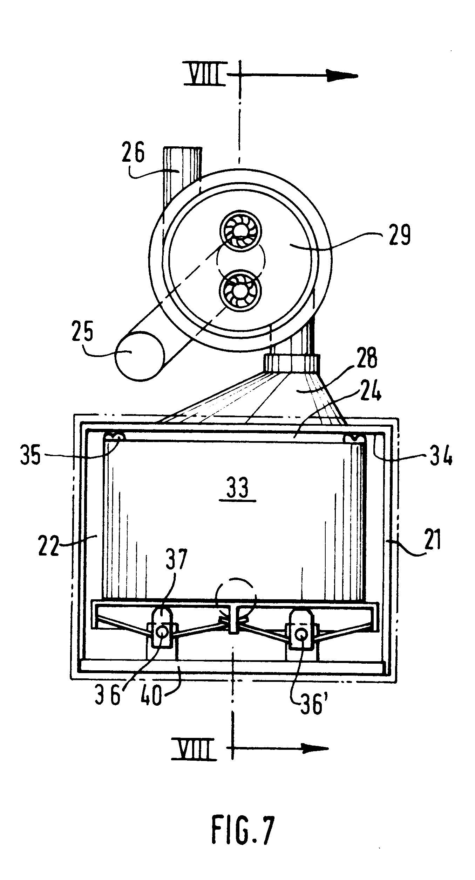

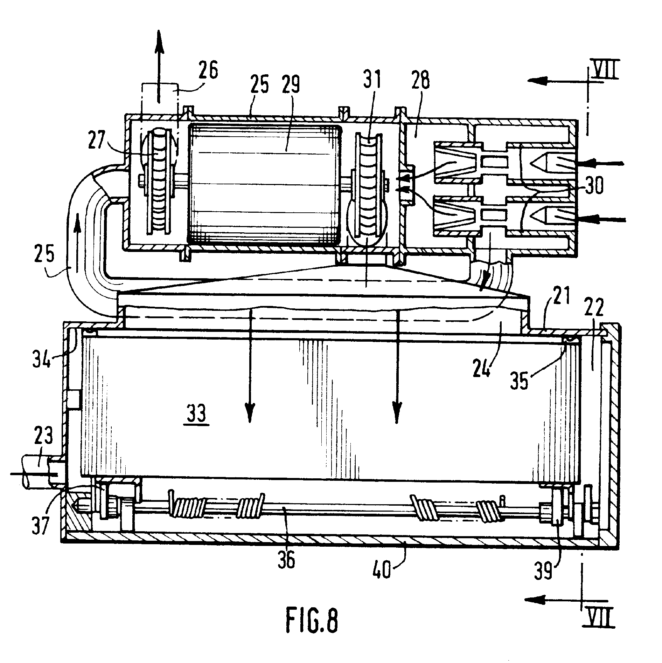

Une installation de filtration complète est décrite rapidement en référence aux figures 7 et 8.

L'installation comporte un caisson 21 formant un compartiment 22 pour un bloc filtrant 33 avec un passage d'admission d'air à filtrer 24 et un passage d'évacuation d'air filtré 23. L'air pénètre par le passage 24 en étant propulsé par un ventilateur 31 et cet air a été préalablement débarrassé de ses poussières les plus grosses par un séparateur 28 à cyclones 30, les poussières étant elles-mêmes soutirées du séparateur 28 et rejetées à l'atmosphère en 26 via le conduit 25 sous l'effet du ventilateur 27 monté sur l'arbre du moteur 29, qui porte également le ventilateur 31. Le bloc filtrant 33 est ici représenté en appui contre la face supérieure du caisson 21 par le joint 35 sous l'effet de verrouillage de cames 37, 39, dont deux sont portées par un axe 36 et deux autres par un axe 36′. On remarque que les cames 37, 39, ont une portée unique d'appui.

On comprend que le bloc filtrant 33 est ici préalablement pourvu de ses deux opercules d'étanchéïté. En cas d'alerte il suffit à l'opérateur de retirer rapidement le bloc filtrant hors du caisson 21 par une trappe ou autre ouverture, de dégager manuellement les opercules d'étanchéïté et de remettre en place le bloc filtrant 33 alors opératif par serrage identique du système à cames.

Selon la variante de mise en oeuvre de figure 5, un bloc filtrant 60 présente un rebord 61 délimitant un passage d'admission à grille 62, le rebord 61 étant équipé de plots d'ancrage 63 pour un joint double 64,64′. Ici le bloc filtrant est rendu étanche par des opercules obturateurs, dont un opercule 65, s'étend au-dessus et au-delà des plots 63.

Selon la figure 6, le bloc filtrant 93 à grille 92 est équipé d'un joint 95 sur un rebord rentrant 94 et l'opercule d'étanchéïté 91 s'étend bien entendu jusqu'à recouvrir en partie le bord 94 sur lequel il est collé ou soudé, mais en deça du joint 95 qu'il ne recouvre pas. Le joint lui-même peut être placé à demeure dans sa position, et l'on procédera à des inspections périodiques de maintenance, ou bien il peut être placé dans une enveloppe séparée comme représenté en 67 à la figure 5, avec le cas échéant une atmosphère gazeuse de protection, comme cela peut être le cas du filtre proprement dit.

L'invention s'applique essentiellement à la sauvegarde humaine dans des habitacles confinés par ventilation d'air décontaminé.

## Revendications

1. Bloc filtrant (1 ; 33 ; 60 ; 93), destiné à être incorporé dans un caisson de filtration (21), notamment NBC ("nucléaire biologique chimique"), ledit bloc comprenant un boîtier (6) contenant un premier (2) et un second (3) étages de filtration superposés et définissant un passage d'admission de gaz à filtrer (12 ; 62 ; 92) et un passage d'évacuation de gaz filtré (4) de part et d'autre des premier et second étages (2 ; 3), l'un (12 ; 62 ; 92) desdits passages étant pourvu, à sa périphérie, de moyens d'étanchéité (13, 13′, 34, 64, 64′, 95) destinés à coopérer avec une paroi du caisson (21) en configuration de montage opérationnel du bloc filtrant dans le caisson, caractérisé en ce que les passages d'admission (12 ; 62 ; 92) et d'évacuation (4) du bloc filtrant (1;33;60;93) sont obturés, en configuration d'attente du bloc filtrant, par des opercules d'étanchéité (15, 16, 65, 91) solidarisés périphériquement au boîtier (6) et agencés de façon à pouvoir être retirés manuellement pour dégager lesdits passages.

2. Bloc filtrant selon la revendication 1, caractérisé en ce que chaque opercule d'étanchéité (15, 16 ; 65 ; 91) est constitué d'un voile de faible épaisseur déchirable.

3. Bloc filtrant selon la revendication 1 ou la revendication 2, caractérisé en ce que les moyens d'étanchéité (13, 13′; 34;64;64′;95) comprennent un joint annulaire en matériau élastique.

4. Bloc filtrant selon la revendication 3, caractérisé en ce que l'opercule d'étanchéité (15) du passage (12) associé au joint (13, 13′) s'étend périphériquement au-delà du joint (13, 13′), en le recouvrant.

5. Bloc filtrant selon la revendication 3, caractérisé en ce que l'opercule d'étanchéité (91) du passage (92) associé au joint (95) s'étend périphériquement en-deçà du joint (95), sans le recouvrir.

6. Bloc filtrant selon la revendication 3, caractérisé en ce qu'il comprend des moyens d'ancrage périphérique (63) pour un joint amovible (64, 64′) et en ce que le joint lui-même (64, 64′) est individuellement placé, en configuration d'attente, dans une enveloppe de protection (67) dégageable manuellement.

7. Bloc filtrant selon l'une des revendications 1 à 6, caractérisé en ce que, en configuration d'attente, il contient une atmosphère neutre, par exemple de l'azote.

8. Equipement de filtration, notamment "NBC", comprenant un caisson de filtration (21) associé à des moyens de ventilation (31) et incorporant un bloc filtrant (33), caractérisé en ce que le bloc filtrant est constitué selon l'une des revendications 1 à 7.

9. Equipement de filtration selon la revendication 8, caractérisé en ce qu'il comprend des moyens de verrouillage (37, 39) pour placer en position serrée unique les moyens d'étanchéité (13, 13', 15, 64, 64', 95) du bloc filtrant (33) en appui étanche contre une paroi interne (34) du caisson (21).

10. Equipement de filtration selon la revendication 9, caractérisé en ce que les moyens de verrouillage comprennent des cames (37, 39) présentant une portée active unique.

## Patentansprüche

1. Filtrierblock (1; 33; 60; 93), der für den Einbau in einen Filtrationskasten (21) bestimmt ist, insbesondere NBC ("nuclear biologisch chemisch"), wobei dieser Block ein Gehäuse (6) aufweist, welches eine erste (2) und eine zweite (3) Filtrationsstufe, die übereinandergelagert sind, enthält und einen Durchgang (12; 62; 92) für die Zufuhr von zu filtrierendem Gas (12; 62; 92) und einen Durchgang (4) für das Abziehen des filtrierten Gases auf beiden Seiten der ersten und zweiten Stufen (2; 3) definiert, wobei einer der Durchgänge (12; 62; 92) an seinem Umfang mit Dichtigkeitsmitteln (13, 13′, 34, 64, 64′, 95) versehen ist, wobei die Dichtigkeitsmittel bei im Einsatz befindlicher Montagekonfiguration des Filtrierblockes in dem Kasten mit einer Wand des Kastens (21) zusammenwirken sollen, dadurch gekennzeichnet, daß die Zufuhr- (12; 62; 92) und Abzugsdurchgänge (4) des Filtrierblockes (1; 33; 60; 93) in Wartekonfiguration des Filtrierblockes durch Dichtigkeitsabdeckungen (15, 16, 65, 91) verschlossen sind, wobei die Dichtigkeitsabdeckungen am Umfang mit dem Gehäuse (6) formschlüssig verbunden sind und derart angebracht sind, daß sie manuell zurückgezogen werden können, um diese Durchgänge freizumachen.

2. Filtrierblock nach Anspruch 1, dadurch gekennzeichnet, daß jede Dichtigkeitsabdekkung (15, 16; 65; 91) aus einem zerreißbaren Schirm geringer Dicke besteht.

3. Filtrierblock nach Anspruch 1 oder Anspruch 2, dadurch gekennzeichnet, daß die Dichtigkeitsmittel (13, 13′; 34; 64; 64′; 95) eine ringförmige Verbindung aus elastischem Material aufweisen.

4. Filtrierblock nach Anspruch 3, dadurch gekennzeichnet, daß sich die Dichtigkeitsabdeckung (15) des Durchganges (12), welcher der Verbindung (13, 13′) zugeordnet ist, am Umfang über die Verbindung (13, 13′) erstreckt, indem sie sie bedeckt.

5. Filtrierblock nach Anspruch 3, dadurch gekennzeichnet, daß sich die Dichtigkeitsabdeckung (91) des Durchganges (92), welcher der Verbindung (95) zugeordnet ist, am Umfang diesseits der Verbindung (95) erstreckt, ohne sie zu bedecken.

6. Filtrierblock nach Anspruch 3, dadurch gekennzeichnet, daß er Mittel (63) für die Verankerung am Umfang für eine bewegliche Verbindung (64, 64′) aufweist und daß die Verbindung (64, 64′) selbst in Wartekonfiguration in einer Schutzhülle (67) individuell angebracht ist, die manuell lösbar ist.

7. Filtrierblock nach einem der Ansprüche 1 bis 6, dadurch gekennzeichnet, daß er in Warteposition eine neutrale Atmosphäre enthält, wie z.B. Stickstoff.

8. Filtrationsausstattung, insbesondere "NBC", mit einem Filtrationskasten (21), der Ventilationsmitteln (31) zugeordnet ist und einen Filtrierblock (33) beinhaltet, dadurch gekennzeichnet, daß der Filtrierblock nach einem der Ansprüche 1 bis 7 ausgebildet ist.

9. Filtrationsausstattung nach Anspruch 8, dadurch gekennzeichnet, daß sie Verriegelungsmittel (37, 39) aufweist, um die Dichtigkeitsmittel (13, 13', 15, 64, 64', 95) des Filtrierblockes (33) unter dichter Abstützung gegen eine Innenwand (34) des Kastens (21) in eindeutig bestimmte Klemmlage zu bringen.

10. Filtrationsausstattung nach Anspruch 9, dadurch gekennzeichnet, daß die Verriegelungsmittel Nocken (37, 39) aufweisen, die eine eindeutig bestimmte aktive Spannweite haben.

## Claims

1. Filter block (1;33;60;93), intended to be incorporated in a filtration chest (21) particularly NBC ("nuclear biological chemical"), said block comprising a case (6) containing a first (2) and a second (3) superposed stages of filtration and defining a passage for the intake of gas to be filtered (12;62;92) and a passage for the evacuation of filtered gas (4) on both sides of the first and second stages (2;3), one (12;62;92) of said passages being provided on its periphery with sealing means (13,13′,34,64,64′,95) for cooperation with a wall of the chest (21) in operational mounting configuration of the filter block in the chest, characterised in that the intake (12;62;92) and evacuation (4) passages of the filter block are obturated, in the form in which said filter block is stored before use, by sealing covers (15,16,65,91) sealed against the periphery of the case (6) and disposed such that they can be manually removed in order to clear said passages.

2. Filter block according to claim 1, characterised in that each sealing cover (15,16;65;91) consists of a thin covering that can be torn.

3. Filter block according to claim 1 or 2, characterised in that the sealing means (13,13′;34;64′;95) include a gasket made of elastic material.

4. Filter block according to claim 3, characterised in that the sealing cover (15) of the passage (12) associated with the gasket (13,13′) extends peripherally beyond the gasket (13,13′), covering the said gasket.

5. Filter block according to claim 3, characterised in that the sealing cover (91) of the passage (92) associated with the gasket (95) extends peripherally short of the gasket (95), without covering the said gasket.

6. Filter block according to claim 3, characterised in that it includes means of peripheral anchoring (63) for a removable joint (64,64′) and in that the joint itself (64,64′) is individually placed, in the form in which the filter block is stored before use, in a protective covering (67) that can be manually released.

7. Filter block according to any one of claims 1 to 6, characterised in that, in the form in which said filter block is stored before use, it contains a neutral atmosphere, for example of nitrogen.

8. Filtration equipment, particularly "NBC", comprising a filtration chest (21) associated with ventilation means (3) and incorporating a filter block (33), characterised in that the filter block is composed according to any one of claims 1 to 7.

9. Filtration equipment according to claim 8, characterised in that it comprises locking means (37,39) for placing the sealing means (13,13′,15,64,64′,95) of the filter block (33) in a unique tight position resting tightly against an inner wall (34) of the chest (21).

10. Filtration equipment according to claim 9, characterised in that the locking means include cams (37,39) having a unique active loading.
